Europäisches Patentamt

European Patent Office

Office européen des brevets

(11) Publication number: **0 195 873**
**B1**

(12) **EUROPEAN PATENT SPECIFICATION**

(45) Date of publication of patent specification: **08.11.89**

(51) Int. Cl.⁴: **G 01 L 1/24, G 01 L 11/00**

(21) Application number: **85630040.5**

(22) Date of filing: **28.03.85**

(54) **A method of forming a colour graduated picture from a black-white graduated picture and in particular a method of producing a colour graduated isobar representation of a pressure distribution.**

(43) Date of publication of application:
**01.10.86 Bulletin 86/40**

(45) Publication of the grant of the patent:
**08.11.89 Bulletin 89/45**

(84) Designated Contracting States:
**DE FR GB IT**

(56) References cited:
**EP-A-0 121 904
DE-A-2 305 816
DE-A-2 513 526
DE-A-2 642 609
FR-A-2 504 706
US-A-4 104 910
PATENT ABSTRACTS OF JAPAN, vol. 6, no. 237
(P-157)1115r, 25th November 1982; & JP - A -
57 137 829**

(73) Proprietor: **THE GOODYEAR TIRE & RUBBER
COMPANY
1144 East Market Street
Akron, Ohio 44316-0001 (US)**

(72) Inventor: **Breedijk, Frans N.
14, rue du Cimetière
L-7396 Hunsdore (LU)**

(74) Representative: **Weyland, J.J. Pierre
Goodyear Technical Center-Luxembourg
L-7750 Colmar-Berg (LU)**

Courier Press, Leamington Spa, England.

## Description

The present invention in its broadest sense relates to a method of obtaining a colour picture from a black and white representation thereof, and in particular to a method of obtaining a colour graduated isobar picture of a pressure distribution, as further described in the preamble of appended claim 1.

A paper entitled 'Measuring of Pressure Forces in Sitting' by B. Rosemeyer and W. Pföringer (Arch. Orthop. Traumat. Surg 95 167—171, 1979) discusses an analytical technique for measuring the pressure distribution on different parts of the body when sitting in a working seat. The measurement of load distribution was done on a transparent plate with a rubber membrane having pyramidal points on its underside adjacent the plate. A contrasting fluid between the membrane and the transparent plate shows up the points where they contact the plate. These points are distributed at a density of 25/cm$^2$. When a load was placed on the membrane, the points as viewed from underneath show up as points of different size, whose overall matrix gives a picture the impression of which is of varying black-white graduation. The load distribution picture is then observed by mirror and photographic pictures taken.

These pictures are then scanned by TV camera which electronically transforms the black-white graduation into colour graduated isobar pictures.

A refinement of this technique was to use a digital measuring video system which also allowed automatic area analysis on the single points of the load distribution picture.

It can be seen that a disadvantage of the above method is that it requires expensive electronic equipment to convert the black-white graduated picture to a colour isobar picture.

FR—A—2 504 706 discloses a method and an apparatus similar to those described above but it does not provide any means for converting black-white pictures to colour pictures.

By contrast the present invention provides a simple and relatively cheap method of converting a black-white picture into a colour representation thereof.

The present invention is characterized in that the image formed by the contact areas of the projections against the plate is recorded as a black-white graduated picture which is formed into colour graduated pictures by:

(1) placing the black-white graduated picture into juxtaposition with a heat sensitive liquid crystal sheet,

(2) directing a radiant heat source onto the black-white graduated picture adjacent the liquid crystal sheet, which changes colour in relation with localized temperature of the sheet as determined by the black/white graduations in the picture, and recording the coloured image of the activated liquid crystal sheet.

The above method is particularly useful for obtaining a colour graduated isobar picture of the footprint of a pneumatic tire in which the tire is loaded against said other side of the membrane, and a contrasting medium is used between the membrane and the transparent plate.

The applicant has found that an unexpectedly good contrast medium is a translucent sheet material such as semi-transparent draughting paper, for example Diamant Extra Nr 102 glatt 70/75 g/m$^2$, or polyester draughting sheets sold under trade name 'Mylar'.

The invention will be described by way of example and with reference to the accompanying drawings in which:

Figure 1 is a portion of an elastomeric membrane as is used in the method of the present invention

Figure 2 is a schematic drawing of the loading of the membrane in order to obtain a graduated black-white picture of the pressure distribution on the membrane

Figure 3 is a typical graduated black-white pressure distribution picture for the footprint of a pneumatic tire

Figure 4 is a schematic drawing of the conversion of the black-white graduated picture into a colour isobar picture

Figure 5 is a black-white reproduction of a colour graduated isobar picture of the footprint picture shown in Figure 6

Figure 6 is a black-white graduated picture of a second tire footprint pressure distribution

Figure 7 is a black-white graduated picture of a tire footprint pressure distribution in which a sheet material contrasting medium is used between the elastomeric membrane and the glass plate.

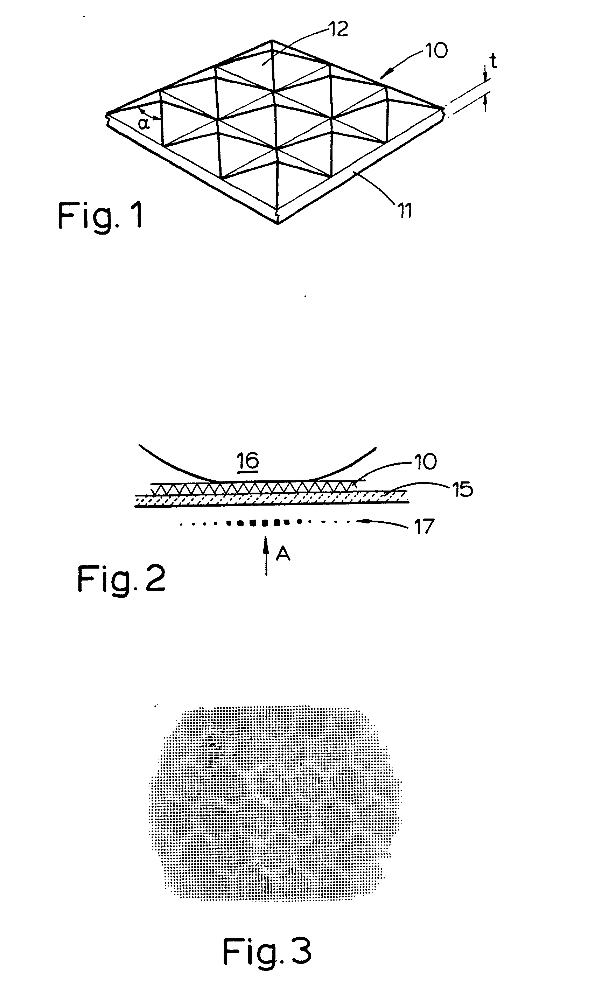

With reference to Figure 2 there is illustrated a portion of an elastomeric membrane as is utilized in the present method. The membrane 10 comprises an elastomeric mat 11 of a thickness 't' of about 1 mm. One side of mat 11 is covered in a plurality of shaped projections, preferably pyramidal projections 12, which each have a square base of 2 mm×2 mm and have a population density of 25 projections/cm$^2$. The included angle alpha between adjacent edges at the apex of each pyramidal projection is 90°. The preferred elastomeric material for the membrane is a low hysterisis carbon black filled natural rubber compound. It has been found that for the measurement of pressure distribution in the footprint of passenger tires which may exert a maximum pressure of about 7 bars, and truck tires which may exert a maximum pressure of about 15 bars, the elastomeric membrane should have a hardness of about 60—65 degrees Shore A for passenger tires and 75—80 degrees Shore A for truck tires.

With reference now to Figure 2 and Figure 3, there is illustrated the way in which graduated black-white pictures of a pressure distribution is obtained. The elastomeric membrane 10 is placed on top of a transparent plate 15, preferably glass, with the pyramidal projections 12 adjacent the plate 15. A contrast medium in the form of fluorescene dyed water is placed between the membrane and the glass plate in order to highlight the contact areas between the projections 12 and the glass plate 15. A pneumatic tire 16 under load is driven across the membrane and causes the pyramidal projections to distort against the plate 15. The resultant image is viewed from underneath the glass plate i.e. in the direction of arrow A.

Each pyramidal projection 12 will distort against the glass plate 15 in relation to the load on the projection, i.e. a heavier load on the projection will form a larger contact area with the glass plate than a lighter load. These differences are shown at 17 in Figure 2. The pressure distribution in the footprint of a tire will therefore cause the larger number of projections 12 to form an overall black-white graduated image in which the black/white ratio in any area is representative of the pressure.

A permanent black and white record of the pressure distribution is made by synchronous flash photography of the footprint taken through the glass plate in the direction of arrow A. The photographic conditions were a shutter speed of 1/500 th of a second using Agfa-Ortho[R] high contrast film with a dual flash, preferably using diffused light. When pictures were taken of the footprint of a tire on a moving vehicle the camera was triggered by an electronic eye which sensed the vehicle. Figure 3 is a black-white graduated picture of a tire footprint pressure distribution of a typical pneumatic tire, and which has been made by the above described method. The black-white picture is printed onto normal photographic printing paper, however, care should be taken that the photographic developing and printing conditions are standardized so that different pictures reflect different footprint pressures and not different photographic processing conditions. The black and white photograph can be further copied onto photocopy paper or onto thin Agfa-Geveart copy paper.

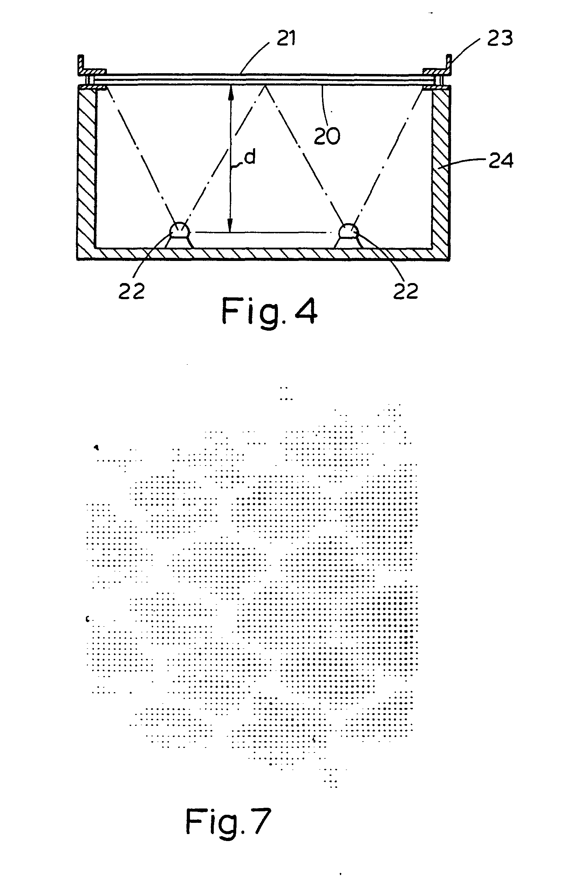

With reference to Figure 4, there is illustrated in schematic form the very simple method by which the black-white graduated picture of the tire pressure distribution in the footprint is converted into a colour isobar picture. The black-white picture of the footprint is printed onto a sheet of a paper 20 which is placed in juxtaposition with a sheet of liquid crystal film 21 of the type used in contact thermography. The two sheets 20 and 21 are held together in a surrounding frame 22. A suitable liquid crystal film is sold under the trade name 'Thermodetect[R]—Saprocil[R]' and is available from SAPROCIL, 217 Rue Clemenceau, F-68160 Ste Marie-aux-Mines, France. The liquid crystal sheet is basically microencapsulated liquid crystals disposed between two polyester films. The colour of the liquid crystal film is dependent upon the temperature of the liquid crystals. Thus if a portion of the film is heated locally it will change colour relative to the rest of film.

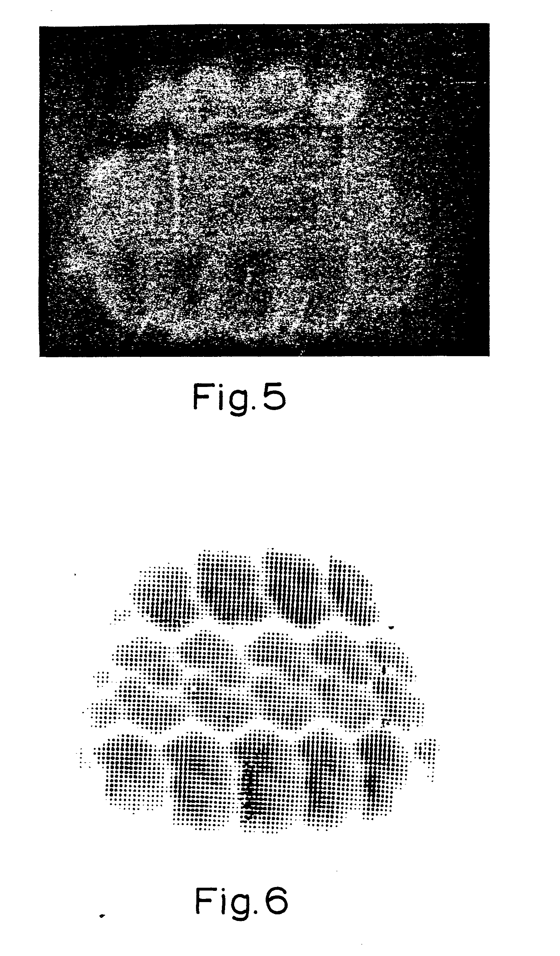

The black and white picture 20 of the footprint of a tire, for example Figure 6, is placed against the liquid crystal sheet 21 to form a laminate in which the printed side of the paper faces away from the liquid crystal sheet. The paper sheet on which the black and white picture is printed should be as thin as possible so that the paper itself does not act as a heat sink. A suitable paper has been found to have a weight of 80—100 gr/m². A pair of radiation heat sources 22 are directed onto the film sheet 21 through the black-white footprint picture 20. A pair of heat sources 22 are used to get a more even spread of radiant heat. The radiation heat source 22 could be an electric white light bulb, for example two tubular bulbs having a single 30 Watt filament, or preferably an infrared bulb. The heat source 22 is located in a surrounding housing 24 to minimize any convection effects. The black areas of the black-white footprint picture preferentially absorb heat and cause the adjacent liquid crystal sheet 21 to change colour in accordance with heat absorbed by the black area. The image of the coloured liquid crystal sheet is permanently recorded from above by colour photography. The coloured photograph of the image of the liquid crystal sheet obtained from the black-white footprint in Figure 6 is reproduced in black and white in Figure 5. Thus a permanent colour graduated isobar picture of the tire footprint pressure distribution is obtained.

The colour of each isobar can be dependsnt upon room temperature, the density of the paper layer 20, the length of time for which the liquid crystal sheet/black and white picture laminate is exposed to the radiant heat, and also the intensity of the radiant heat. However, it has been found that for a given intensity of radiant heat, with the other parameters being constant, the colour of each isobar will stabilize after a certain time period. The intensity of the radiation could be varied by altering the power of the radiation source 22 or by altering the distance 'd' of the radiation source 22 from the two sheets 21 and 20. In the present example, using paper 20 as specified overleaf, a distance 'd' of 120 mm and a pair of heat sources 22 of 30 Watts each, it has been found that the colour of each isobar will stabilize after about 1 minute.

For a given set of time/intensity parameters the different colour isobars can be calibrated. A series of different known weights is placed on the membrane 10 in spaced locations and the above described procedure is carried out to obtain a colour isobar picture for pressure exerted by the known weights on the membrane 10. The pressures exerted by the known weight can be calculated from the known weights and the areas over which they bear and hence an approximate pressure can be assigned to each colour of the isobar picture.

A slight disadvantage of the above described method for obtaining a colour isobar picture of the pressure distribution in the footprint of a tire is in the use of a liquid contrast medium i.e. fluorescene dyed water. Because the membrane 10 has a large number of downwardly pointing projections 12 it is difficult to remove all the air entrapped by the liquid from between the membrane and the glass plate. Furthermore the maximum road speed for which the pressure distribution in the footprint of a tire mounted on a vehicle can be measured, when a tire is driven across the membrane, is limited by the interaction between the elastomeric membrane and the liquid. This in practical terms means that the use of the elastomeric membrane 10 combined with a liquid contrast medium is only good for measurements for tires mounted vehicles travelling up to about 11 m/s (40 kp/h). Therefore in a preferred embodiment of a method according to this invention the contrast liquid, is replaced by a thin translucent sheet material having a matt finish. An example of a suitable material is draughting paper, for example Diamant Extra$^R$ type 102, having a thickness such that it weighs about 70/75 gr/m$^2$, or polyester draughting sheet which is a polyester film having a matt finish on both sides and which is between 50—80 microns thick and which is used by draughtsmen; such a sheet is sold under the tradenames Mylar$^{TM}$ or Omnigraphic$^{TM}$.

It has been found that if a sheet of translucent paper, or Mylar film is placed between the pyramidal projections and the glass plate that it can act as a contrast medium. It is thought that the projections 12 press the thin sheet material against the glass and cause an interference with the reflective or light scatter properties at the glass/sheet material interface. If photographed from below by synchronous flash photography, a black and white photograph of the footprint reveals a black/white graduated pressure distribution picture similar to that shown in Figure 7. This picture can be converted to a colour isobar picture by the techniques previously described.

It is considered that because the interaction between the elastomeric membrane and the sheets of paper/Mylar is much faster than the interaction with a liquid contrast medium, that this preferred embodiment could be used to obtain a black-white graduated picture of a pressure distribution on tires mounted on vehicles travelling in excess of 28 m/s (100 kp/h) and perhaps over 56 m/s (200 kp/h), when they are driven across the elastomeric membrane. Hence, a colour isobar pressure distribution can be obtained from this black and white picture.

The reaction of the elastomeric membrane against the sheet paper/Mylar can be enhanced by placing a thin layer of lubricant, such as silicone oil, between the projections on the membrane and the sheet.

**Claims**

1. A method of forming a graduated isobar picture of pressure distribution comprising the steps of:

(A) placing an elastomeric membrane (10) having a plurality of shaped projections (12) on one side thereof against a transparent plate (15), the projections being adjacent the plate,

(B) placing a load on the other side of the elastomeric membrane to deform the projections against the plate,

(C) observing through the plate and recording the image formed by the contact areas of the projections against the transparent plate, characterized in that; the image formed by the contact areas of the projections (12) against the plate (15) is recorded as a back-white graduated picture (20) which is formed into colour graduated pictures by:

(1) placing the black-white graduated picture (20) into juxtaposition with a heat sensitive liquid crystal sheet (21),

(2) directing a radiant heat source (22) onto the black-white graduated picture (20) adjacent the liquid crystal sheet (15), which changes colour in relation with localized temperature of the sheet (15) as determined by the black/white graduations in the picture, and

(3) recording the coloured image of the activated liquid crystal sheet.

2. A method as claimed in claim 1 characterized in that the colour image of the activated liquid crystal sheet is recorded by colour photography.

3. A method as claimed in claim 1 or claim 2 characterized in that the black-white graduated picture is recorded via photographic techniques onto paper, and the paper is placed adjacent the liquid crystal sheet (15) whith the black-white image on the side of the paper facing the heat source (22).

4. A method as claimed in claim 3 characterized in that the paper onto which the black-white graduated image is transported is thin paper having a density of less than 100 gr/m$^2$.

5. A method of forming a colour isobar picture of the pressure distribution in the footprint of a pneumatic tire, and including the methods of any one of claims 1 to 4 in which a pneumatic tire (16) is loaded against said other side of the membrane (10) characterized in that a contrasting medium is used between the membrane (10) and the transparent plate (15) in order to highlight the contact areas of the projections.

6. A method as claimed in claim 5 characterized in that the tire (16) is a passenger car tire and that the elastomeric membrane (10) is made from a rubber compound having a hardness of between 60—65 degrees Shore A.

7. A method as claimed in claim 6 characterized in that the tire (16) is a truck tire and the elastomeric membrane (10) is made from a rubber compound having a hardness of between 75—80 degrees Shore A.

8. A method according to any one of claims 5, 6 or 7, characterized in that the contrasting medium is a thin translucent sheet material having a matt surface finish.

9. A method according to claim 8 characterized in that the sheet material is Mylar$^R$ polyester drawing sheet.

10. A method as claimed in claim 8 or claim 9, characterized in that the contrast medium is a thin polyester sheet having a thickness of between 50—80 microns.

11. A method as claimed in any one of claims 8, 9 and 10, characterized in that a thin layer of lubricant is placed between the translucent sheet and the membrane.

12. A method as claimed in claim 11, characterized in that the lubricant is silicone oil.

13. A method of obtaining a graduated isobar picture of the pressure distribution in the footprint of a tire on a vehicle which is travelling in excess of 28 m/s (100 kp/h) and including a method as claimed in any one of claims 8 to 12.

## Patentansprüche

1. Verfahren zur Bildung eines abgestuften isobaren Bildes einer Druckverteilung, bestehend aus den Schritten:

(A) Anordnung einer elastomeren Membran (10) mit einer Vielzahl von geformten Vorsprüngen (12) auf einer Seite gegen eine transparente Platte (15), wobei die Vorsprünge angrenzend an die Platte liegen,

(B) Anordnen einer Belastung auf der anderen Seite der elastomeren Membran, um die Vorsprünge gegen die Platte zu verformen,

(C) Beobachten durch die Platte und Aufzeichnen des Bildes, das durch die Kontaktflächen der Vorsprünge gegen die transparente Platte ausgebildet wird, dadurch gekennzeichnet, daß das von den Kontaktflächen der Vorsprünge (12) gegen die Platte (15) geformte Abbild als schwarz-weiß abgestuftes Bild (20) aufgezeichnet wird, welches in farbabgestufte Bilder umgewandelt wird durch

(1) Anordnen des schwarz-weiß abgestuften Bildes (20) nebeneinander liegend mit einer wärmesensitiven Flüssigkristalltafel (21),

(2) Richten einer Strahlungsheizungsquelle (22) auf das schwarz-weiß abgestufte Bild (20), das an der Flüssigkristalltafel (12) anliegt, welche die Farbe in Verbindung mit der lokalisierten Temperatur des Blattes (15) verändert, wie sie durch die Schwarz-Weiß-Abstufungen in dem Bild bestimmt sind, und (3) Aufzeichnen des farbigen Abbildes der aktivierten Flüssigkristalltafel.

2. Verfahren nach Anspruch 1, dadurch gekennzeichnet, daß das farbige Abbild der aktivierten Flüssigkristalltafel mittels Farbfotografie aufgezeichnet wird.

3. Verfahren nach Anspruch 1 oder 2, dadurch gekennzeichnet, daß das abgestufte Schwarz-Weiß-Bild mittels fotografischer Techniken auf Papier aufgezeichnet wird, und daß das Papier angrenzend an die Flüssigkristalltafel (15) angeordnet wird, wobei das Schwarz-Weiß-Bild auf der Seite des Papieres liegt, die zu der Wärmequelle (22) gerichtet ist.

4. Verfahren nach Anspruch 3, dadurch gekennzeichnet, daß das Papier, auf welchem das abgestufte Schwarz-Weiß-Bild transponiert ist, dünnes Papier mit einer Dichte von weniger als 100 g/m² ist.

5. Verfahren zur Herstellung eines farbigen isobaren Bildes der Druckverteilung in der Aufstandsfläche eines Luftreifens, das das Verfahren nach einem der Ansprüche 1 bis 4 umfaßt, wobei die Last eines Luftreifens (16) gegen die andere Seite der Membran (10) aufgebracht wird, dadurch gekennzeichnet, daß ein Kontrastmittel zwischen der Membran (10) und der transparenten Platte (15) verwendet wird, um die Kontaktflächen der Vorsprünge hervorzuheben.

6. Verfahren nach Anspruch 5, dadurch gekennzeichnet, daß das Reifen (16) ein Personenwagenreifen ist und daß die elastische Membran (10) aus einer Gummimischung mit einer Härte von 60 bis 65° Grad Shore A besteht.

7. Verfahren nach Anspruch 6, dadurch gekennzeichnet, daß der Reifen (16) ein Lastwagenreifen ist und daß die elastische Membran (10) aus einer Gummimischung mit einer Härte zwischen 75 und 80° Grad Shore A besteht.

8. Verfahren nach einem der Ansprüche 5, 6 oder 7, dadurch gekennzeichnet, daß das Kontrastmittel ein dünnes lichtdurchlässiges Blattmaterial mit einem matten Oberflächenfinish ist.

9. Verfahren nach Anspruch 8, dadurch gekennzeichnet, daß das Blattmaterial ein Mylar R Polyesterzeichenblatt ist.

10. Verfahren nach Anspruch 8 oder 9, dadurch gekennzeichnet, daß das Konstrastmedium ein dünnes Polyesterblatt mit einer Dicke von 50 bis 80 Mikrometer ist.

11. Verfahren nach einem der Ansprüche 8, 9 und 10, dadurch gekennzeichnet, daß eine dünne Schicht eines Schmiermittels zwischen dem lichtdurchlässigen Blatt und der Membran angeordnet wird.

12. Verfahren nach Anspruch 11, dadurch gekennzeichnet, daß das Schmiermittel Silikonöl ist.

13. Verfahren zur Erhaltung eines abgestuften isobaren Bildes der Druckverteilung in der Aufstandsfläche eines Reifens an einem Fahrzeug, welches schneller fährt als 28 m/sec (100 kp/h), mit einem Verfahren nach einem der Ansprüche 8 bis 12.

## Revendications

1. Procédé de formation d'une image isobare graduée de répartition de pression, ce procédé comprenant les étapes consistant à:

(A) placer une membrane élastomère (10) comportant plusieurs saillies mises à forme (12) sur une de ses faces, contre une plaque transparente (15), les saillies étant adjacentes à cette plaque,

(B) placer une charge sur l'autre face de la membrane élastomère afin de déformer les saillies contre la plaque,

(C) procéder à des observation à travers la plaque et enregistrer l'image formée par les zones de contact des saillies contre la plaque transparente, caractérisé en ce que l'image formée par les zones de contact des saillies (12) contre la plaque (15) est enregistrée sous forme d'une image graduée et noir et blanc (20) qui est transformée en images graduées en couleurs par les étapes consistant à:

(1) placer l'image graduée en noir et blanc (20) en juxtaposition avec une feuille à cristaux liquides (21) sensible à la chaleur,

(2) diriger une source de chaleur rayonnante (22) sur l'image graduée en noir et blanc (20) en une position adjacente à la feuille à cristaux liquides (15), modifiant ainsi la couleur en relation avec la température localisée de la feuille (15), ainsi qu'on le détermine par les graduations en noir et blanc de l'image, et

(3) enregistrer l'image colorée de la feuille activée à cristaux liquides.

2. Procédé selon la revendication 1, caractérisé en ce que l'image en couleurs de la feuille activée à cristaux liquides est enregistrée par photographie en couleurs.

3. Procédé selon la revendication 1 ou 2, caractérisé en ce que l'image graduée en noir et blanc est enregistrée moyennant des techniques photographiques sur le papier, lequel est placé en une position adjacente à la feuille à cristaux liquides (15), l'image en noir et blanc étant placée sur la face du papier, qui est tournée vers la source de chaleur (22).

4. Procédé selon la revendication 3, caractérisé en ce que le papier sur lequel l'image graduée en noir et blanc est transposée, est un papier mince ayant une densité inférieure à 100 g/m².

5. Procédé de formation d'une image isobare en couleurs de la répartition de pression dans l'empreinte d'un bandage pneumatique, ce procédé comprenant les procédés selon l'une quelconque des revendications 1 à 4, procédé dans lequel un bandage pneumatique (16) est sollicité contre l'autre face précitée de la membrane (10), caractérisé en ce qu'on utilise un milieu contrastant entre la membrane (10) et la plaque transparente (15) afin d'accentuer les zones de contact des saillies.

6. Procédé selon la revendication 5, caractérisé en ce que le bandage pneumatique (16) est un bandage pneumatique pour voitures automobiles et en ce que la membrane élastomère (10) est réalisée à partir d'un composé de caoutchouc ayant une dureté comprise entre 60 et 65 degrés Shore A.

7. Procédé selon la revendication 6, caractérisé en ce que le bandage pneumatique (16) est un bandage pneumatique pour poids lourds, tandis que la membrane élastomère (10) est réalisée à partir d'un composé de caoutchouc ayant une dureté comprise entre 75 et 80 degrés Shore A.

8. Procédé selon l'une quelconque des revendications 5, 6 ou 7, caractérisé en ce que le milieu contrastant est une matière en feuille translucide mince ayant un fini superficiel mat.

9. Procédé selon la revendication 8, caractérisé en ce que la matière en feuille est une feuille à dessiner en polyester "Mylar" (marque commerciale déposée).

10. Procédé selon la revendication 8 ou 9, caractérisé en ce que le milieu contrastant est une feuille de polyester mince ayant une épaisseur comprise entre 50 et 80 microns.

11. Procédé selon l'une quelconque des revendications 8, 9 ou 10, caractérisé en ce qu'on place une couche mince d'un lubrifiant entre la feuille translucide et la membrane.

12. Procédé selon la revendication 11, caractérisé en ce que le lubrifiant est une huile de silicone.

13. Procédé en vue d'obtenir une image isobare graduée de la répartition de pression dans l'empreinte d'un bandage pneumatique monté sur un véhicule roulant à plus de 28 m/s (100 kP/h), ce procédé faisant intervenir un procédé selon l'une quelconque des revendications 8 à 12.

Fig. 1

Fig. 2

Fig. 3

1

Fig. 4

Fig. 7

Fig.5

Fig.6